# FASCICULE DE BREVET EUROPEEN

(11) **EP 1 764 233 B1**
(45) Date de publication et mention de la délivrance du brevet: **08.08.2012**
(21) Numéro de dépôt: 06019406.5
(22) Date de dépôt: 15.09.2006
(51) Int. Cl.: B60B 1/04, B60B 5/02

(54) **Procédé de fabrication d'une roue à rayons en tension et roue à rayons en tension**
Herstellverfahren für ein Rad mit Zugspeichen und Rad mit Zugspeichen
Production method for a wheel having tension spokes and wheel having tension spokes

(30) Priorité: 16.09.2005 FR 0509501; 21.12.2005 FR 0513086
(43) Date de publication de la demande: 21.03.2007
(73) Titulaire: MAVIC S.A.S., 74370 Metz-Tessy (FR)
(72) Inventeur: Mercat, Jean-Pierre, 74650 Chavanod (FR); Augris, Fabrice, 74540 Cusy (FR)

(56) Documents cités:
- FR-A- 2 586 378
- NL-C2- 1 015 285
- US-A- 5 110 190
- US-A- 6 036 281

## Description

L'invention concerne un procédé de fabrication d'une roue à rayons en tension. L'invention concerne également une roue à rayons en tension pour un cycle. Notamment mais non exclusivement l'invention concerne une telle roue dont la jante et les rayons sont réalisés en matériau composite.

De façon connue, une roue à rayons en tension comprend une jante périphérique avec un canal de réception d'un pneumatique, un moyeu central et des rayons de liaison entre la jante et le moyeu.

Usuellement les rayons sont répartis selon deux nappes, les rayons de chaque nappe reliant la jante à chacune des extrémités du moyeu. Les rayons sont tendus pour que les différents composants de la roue, la jante, le moyeu et les rayons forment un ensemble rigide.

Les propriétés importantes d'une roue sont son poids, sa rigidité et sa résistance à la fatigue.

Le poids dépend essentiellement des matériaux utilisés. En règle générale la jante est réalisée en alliage d'aluminium ou autre matériau léger, et les rayons sont en acier inoxydable, ou alors en alliage d'aluminium.

On connaît également des roues dont la jante et/ou les rayons sont réalisés en matériau composite. Une matière composite présente en effet certains avantages par rapport aux métaux couramment utilisés. En particulier, elle présente un module d'élasticité élevé, 125 000 MPa (MégaPascals) comparé à 72 000Mpa pour un alliage d'aluminium 7075, et une densité faible 1,55 Kg/m3 comparé à 2,8 Kg/m3 pour l'alliage d'aluminium 7075 et 7,8 pour un acier inoxydable.

En outre un matériau composite a une résistance à la fatigue nettement supérieure à celle des métaux. Lorsque la roue est entraînée en rotation les rayons sont soumis à des cycles répétés de contraintes de traction et de détente, la jante est également soumise localement à des cycles de contrainte en compression et en traction. Pour un rayon en métal ces contraintes peuvent provoquer à la longue des fissures conduisant à des ruptures. Un rayon en matériau composite présente un comportement beaucoup plus stable en résistance à la fatigue.

La rigidité d'une roue s'évalue par sa résistance à la déformation. On distingue usuellement la rigidité frontale, c'est-à-dire la résistance à la déformation en réaction à un choc ou une sollicitation frontale et la rigidité latérale suite à un choc ou une sollicitation latérale. On recherche particulièrement à rendre une roue rigide latéralement.

La rigidité d'une roue dépend principalement de la tension des rayons qui existe entre la jante et le moyeu. La tension des rayons doit être suffisamment élevée pour qu'aucun rayon ne se détende lors d'un fonctionnement normal de la roue. Si un rayon se détend momentanément sous l'action d'une charge externe c'est comme si le rayon était inexistant. La jante n'est plus soutenue par ce rayon et se déforme sous l'effet des efforts auxquelles elle est soumise du fait de la charge et de la tension exercée par les autres rayons. Ainsi, plus les rayons peuvent être tendus, plus on recule le seuil au-delà duquel la tension d'un rayon s'annule sous l'action d'une charge externe, plus la roue est rigide.

La tension d'un rayon doit cependant être considérée de façon relative. Par définition la jante est en équilibre statique par rapport au moyeu sous l'effet de la tension de l'ensemble des rayons. Dans ces conditions en statique la tension d'un rayon est reprise par réaction par les autres rayons selon leur position relativement au rayon considéré. En dynamique, une variation de tension d'un rayon est reportée sur les autres rayons sous la forme d'une augmentation ou d'une diminution de leur tension propre.

La façon la plus courante de mettre des rayons en tension consiste à associer à chacun des rayons un système vis / écrou avec lequel on ajuste la longueur utile du rayon.

Un tel dispositif de mise en tension est avantageux car il permet à la fois de régler de façon globale la tension dans les nappes de rayons, et d'ajuster localement la géométrie de la jante par une action locale sur la tension d'un ou plusieurs rayons donnés. Géométriquement les paramètres d'une jante qui peuvent être ajustés sont le voile (déformation de la jante selon une direction axiale), le centrage (position relative de l'axe de révolution de la jante et l'axe de rotation du moyeu), ou le saut (déformation de la jante selon une direction radiale).

La tension globale des rayons est ajustée en tendant plus ou moins l'ensemble des rayons, compte tenu de leurs propriétés mécaniques. Ceci détermine la rigidité de la roue. Un défaut de géométrie de la jante peut de plus être corrigé en ajustant localement la tension d'un ou plusieurs rayons par exemple à l'aide d'un système vis/écrou intégré au niveau des extrémités d'accrochage du rayon. Le processus de réglage/ajustement de la géométrie d'une jante est un processus long et coûteux, car il requière une action de réglage sur chaque rayon pris individuellement.

Un tel dispositif de réglage est connu pour des rayons métalliques mais aussi pour des rayons en matériau composite. On peut citer à ce sujet les brevets FR 2 586 378, US 6 036 281, ou encore EP 872 357 ou EP 1 044 827. On peut trouver le dispositif de mise en tension des rayons à la liaison entre le rayon et la jante, entre le rayon et le moyeu ou encore le long du rayon lui-même.

Le document FR 2 586 378 A forme l'état de la technique le plus proche selon le préambule de la revendication 1 ou 6 respectivement.

Un tel dispositif associé à chaque rayon donne de bons résultats. Cependant, cela augmente de façon significative le poids et l'inertie de la roue. En outre, la liaison vis/écrou du dispositif de mise en tension crée des zones de faiblesse où la transmission des efforts et la résistance à la fatigue ne sont pas maîtrisées aussi bien que dans le corps de rayon lui-même. Dans le cas de rayons composites, le recours à un dispositif de réglage vis/écrou, nécessairement métallique et donc sensible aux phénomènes de rupture de fatigue, diminue la résistance à la fatigue de l'ensemble rayon/dispositif de réglage et limite donc l'intérêt de recours à un rayon composite. Ces dispositifs de réglage vis/écrou constituent également un apport de poids, réduisant également l'intérêt de l'utilisation de rayons composites.

Un autre mode de mise en tension des rayons consiste à écarter l'une de l'autre les nappes de rayons au niveau du moyeu. Le brevet US 5 104 199 décrit un système d'écartement au niveau du moyeu avec des rondelles fendues qui sont logées dans des gorges du corps de moyeu pour maintenir l'écartement entre les deux nappes de rayon. En écartant l'une de l'autre les nappes de rayons au niveau du moyeu on tend simultanément l'ensemble des rayons des deux nappes. Les rayons eux-mêmes sont dépourvus de moyens propres de mise en tension. De tels procédés sont utilisés en liaison avec des roues composites. De tels procédés sont performants car la roue obtenue est monolithique et aucune pièce de réglage superflue en métal ne vient augmenter la masse de la roue ou la fragiliser. De ce fait, la roue est plus légère et présente moins d'inertie. Cependant une fois les rayons tendus, la géométrie de la jante ne peut pas être modifiée. Cette géométrie dépend, dans ces conditions, de la précision avec laquelle la fabrication et l'assemblage des différents éléments ont été réalisés. Le fait que la roue ne comporte aucun moyen de réglage final peut conduire à rebuter une quantité importante de produit et à augmenter considérablement le prix de revient. De plus la structure monolithique de la roue ne permet pas de réparation, la roue devant être changée dans son intégralité avec le moyeu en cas de problème.

Compte tenu de cet état de la technique il existe un besoin pour un procédé de fabrication d'une roue à rayons en tension et pour une roue qui présente un système de mise en tension des rayons amélioré, en ce qu'il est simplifié tout en restant performant vis-à-vis des propriétés mécaniques et des paramètres de géométrie de la jante. Il existe également un besoin pour une roue dont la durée de vie soit augmentée, et notamment dont la sensibilité aux phénomènes de rupture de fatigue soit réduite. On souhaite également pouvoir réaliser des roues à rayons en matériau composite réglables et légères.

Enfin, on souhaite avoir un procédé de réglage des caractéristiques de géométrie d'une roue qui soit plus rapide.

A cet effet le procédé de fabrication d'une roue selon l'invention, la roue comprenant une jante périphérique, un moyeu central et des rayons de liaison tendus en tension entre la jante et le moyeu comprend les étapes :
- de répartir les rayons selon deux groupes, un premier groupe de rayons dépourvus de dispositif de mise en tension et un second groupe de rayons ayant un dispositif de mise en tension,
- d'assembler les rayons à la jante et au moyeu,
- puis d'ajuster la tension des rayons à l'aide des dispositifs de mise en tension des rayons du second groupe de rayons.

Un tel procédé de fabrication permet de réduire au moins par deux le temps de réglage puisqu'il ne s'agit plus que de régler les rayons d'un seul groupe et par exemple, un rayon sur deux.

La roue selon l'invention comprend un moyeu central, une jante périphérique et des rayons de liaison entre la jante et le moyeu. Le moyeu a deux extrémités, la jante et chacune des extrémités du moyeu ont un dispositif d'accrochage des rayons, les rayons ont un corps et des extrémités par lesquelles ils sont accrochés d'un côté à la jante et de l'autre au moyeu, et ils sont répartis selon au moins deux nappes, chacune des nappes reliant la jante à une extrémité du moyeu.

Les rayons sont répartis en deux groupes, un premier groupe de rayons dépourvus de tout dispositif de mise en tension et un second groupe de rayons ayant un dispositif de mise en tension entre leurs deux extrémités d'accrochage.

L'invention sera mieux comprise à l'aide de la description ci-dessous et en référence au dessin schématique en annexe dans lequel :
La figure 1 montre une roue en vue de face.
Les figures 2 et 3 représentent la roue de la figure 1 vue de droite et de gauche, respectivement.
La figure 4 représente une vue partielle en perspective de la roue de la figure 1.
Les figure 5 et 7 sont des vues en section au niveau de la jante et illustrent les différents modes d'accrochage des rayons pour la roue de la figure 1.
La figure 6 montre une variante de construction du dispositif de la figure 5.
Les figures 8 à 11 montrent une jante en section et des rayons réalisés selon une variante de mise en oeuvre de l'invention.
Les figures 12 et 13 illustrent la construction d'une roue selon un autre mode de mise en oeuvre de l'invention.
La figure 14 montre un autre mode de construction des rayons.
La figure 15 illustre une variante de construction des rayons de la figure 14.

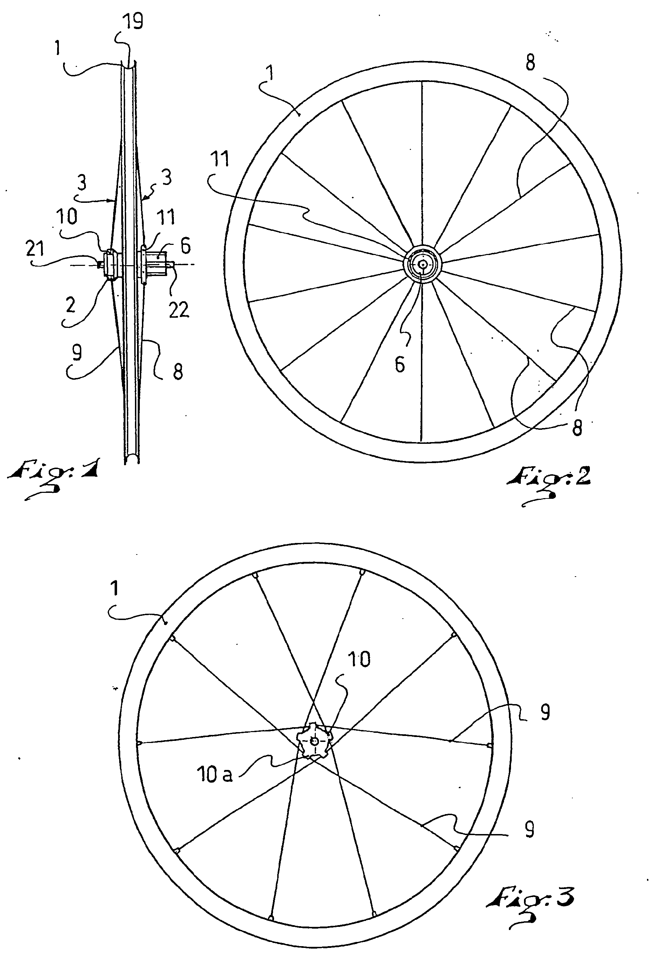

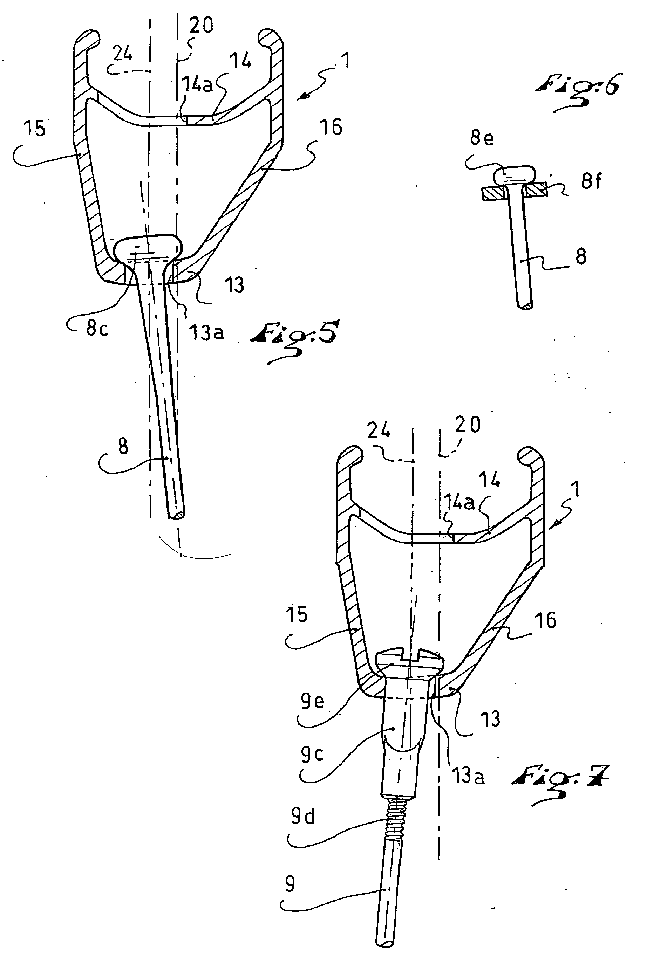

La figure 1 représente une roue comprenant une jante périphérique 1, un moyeu central 2 et des rayons de liaison 3 entre la jante et le moyeu 2. La jante 1 est d'un type connu et présente tout profil de section approprié symétrique ou non symétrique. Un profil de section préféré sera toutefois décrit ultérieurement en relation avec les figures 5 et 7. De façon classique la jante possède sur l'extérieur un canal 19 de réception d'un pneumatique ou d'un boyau.Vers l'intérieur la jante est munie de moyens d'accrochage des rayons qui sont de tout type approprié et dont deux modes de réalisation particuliers seront décrits ultérieurement en relation avec les figure 5, 7 et 8 à 11.

Le moyeu 2 est de tout type approprié. Selon le mode de réalisation illustré, la roue est une roue arrière et le moyeu 2 présente sur un côté un corps de roue libre 6 qui est prévu pour recevoir des pignons de renvoi de la chaîne d'entraînement. Il présente des extrémités 21, 22 de fixation au cadre du vélo.

Le fait que la roue soit une roue arrière n'est pas limitatif, et l'invention s'applique également à une roue dont le moyeu est prévu pour recevoir un disque de freinage ou même pour une roue dont le moyeu est symétrique.

Vers chacune de ses extrémités axiales 10, 11, le moyeu 2 est équipé d'un dispositif d'accrochage des rayons. Tout dispositif approprié convient, par exemple un bulbe, une joue, un disque, des créneaux ou autres. Le dispositif d'accrochage est adapté au type de rayons 3, selon que les rayons 3 sont droits ou coudés et à leur disposition relative selon qu'ils sont droits ou croisés. Tout ceci est connu de l'homme du métier.

Selon le mode de réalisation illustré, les rayons 3 sont des rayons droits, ils sont répartis selon deux nappes de rayons 8 et 9. Chacune des nappes relie la jante 1 à une des extrémités axiales 10 et 11 du moyeu. Du côté du moyeu 2 chacun des rayons des nappes 8 ou 9 a une extrémité d'accrochage formée de façon classique par une tête élargie 8a, 9a. Les extrémités 8c, 9c, 9d des rayons du côté de la jante seront décrites ultérieurement.

Pour la roue qui est représentée, la nappe de rayons 8 qui est située du côté de la roue libre 6 est composée de rayons radiaux, c'est-à-dire orientés de façon radiale par rapport à l'axe du moyeu 2, et la nappe de rayons 9 qui est située du côté opposé à la roue libre 6 est composée de rayons tangents au moyeu qui se croisent mutuellement. Ceci toutefois n'est pas limitatif et d'autres modes de rayonnage peuvent également convenir. En particulier les deux nappes peuvent être composées de rayons croisés, ou encore les rayons peuvent être radiaux du côté opposé à la roue libre et croisés du côté de la roue libre.

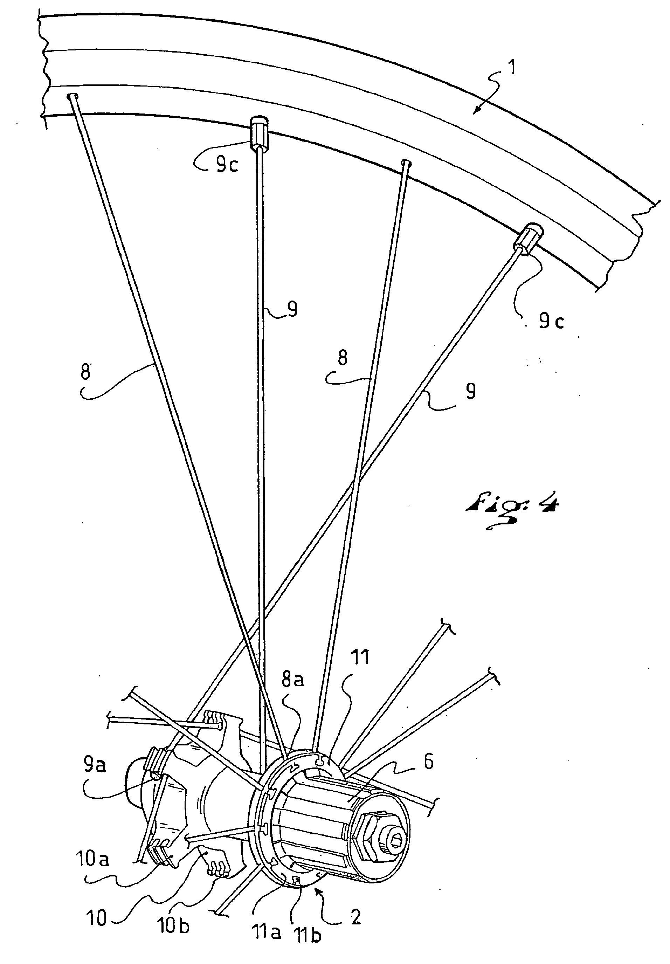

Pour la roue représentée qui comprend des rayons droits (cf. figure 4), l'extrémité 10 du moyeu située du côté opposé à la roue libre 6 est pourvue de créneaux 10a. Chaque créneau 10a est traversé par deux saignées 10b orientées de façon sensiblement perpendiculaire à l'axe du moyeu 2 et ouvertes vers l'extérieur, et deux rayons 9 sont engagés tête-bêche dans les saignées 10b par leur tête élargie 9a. Un tel mode de construction des créneaux est connu, il est par exemple décrit dans la demande de brevet FR 2 794 063.

L'extrémité axiale 11 du moyeu située du côté de la roue libre 6 est formée par un bulbe ouvert 11a avec des entailles axiales 11b dans lesquelles sont engagées les extrémités de rayon 8 de façon que les têtes de rayons élargies 8a soient retenues à l'intérieur du bulbe. Eventuellement le bulbe est refermé par tout moyen approprié, par exemple une coupelle, et il est possible de prévoir une rondelle intermédiaire pour assurer la retenue des têtes de rayons 8a à l'intérieur du bulbe 11a. D'autres modes d'accrochage des rayons pourraient aussi convenir.

Selon une caractéristique de l'invention, les rayons 3 sont répartis en deux groupes. Un premier groupe de rayons est formé avec des rayons dépourvus de dispositif propre de mise en tension. C'est à dire que les rayons de ce premier groupe ont un corps filiforme continu entre leurs extrémités d'accrochage. La distance entre les deux extrémités d'accrochage de chaque rayon est déterminée, elle ne peut varier que sous l'effet de la tension qui est induite entre les extrémités du rayon, du fait de l'élasticité propre du corps de rayon.

Le second groupe de rayons comprend des rayons ayant un dispositif de mise en tension qui est situé au niveau d'au moins une extrémité d'accrochage. Ce dispositif permet d'induire et d'ajuster une tension dans le corps de rayon. Par exemple il s'agit d'un dispositif vis/écrou situé au niveau d'une extrémité du rayon ou encore sur la longueur du corps. Ce dispositif tend à rapprocher (ou reculer) l'une de l'autre les deux extrémités d'accrochage du rayon. Le moyen, la jante et les autres rayons s'opposent à ce rapprochement, ce qui induit une tension dans le corps de rayon, et par réaction des contraintes dans le reste de la roue.

Ainsi, en répartissant l'ensemble des rayons dans deux groupes différents, les dispositifs de mise en tension du second groupe de rayons créent une tension dans ces rayons du second groupe, et par réaction induisent une tension dans les rayons du premier groupe.

Par ailleurs la durée des opérations d'ajustement/réglage de la roue est diminuée puisque seuls les rayons pourvus d'un dispositif de mise en tension doivent être réglés.

Globalement il y a moins de dispositifs de mise en tension des rayons. La roue est donc plus légère et les rayons dépourvus de dispositif de mise en tension peuvent être davantage sollicités en traction car ils sont plus résistants à l'élongation et à la fatigue.

Pour le mode de réalisation illustré, la répartition des rayons en deux groupes est associée aux nappes, c'est à dire que les rayons 8 de la nappe située du côté de la roue libre 6 forment le premier groupe de rayons dépourvus de dispositif de mise en tension, et que les rayons 9 de la nappe située du côté opposé à la roue libre 6 forment les rayons du second groupe. Ceci toutefois n'est pas limitatif et d'autres modes de répartition seront décrits ultérieurement. Avec cette répartition, seule la moitié des rayons est pourvue de moyens de réglage (sauf si le nombre de rayons est différent dans les deux nappes) et le temps de réglage est donc diminué par deux.

En se reportant aux figures 5 et 7 on voit que les rayons 8 sont accrochés à la jante directement, par une tête élargie 8c qui forme l'extrémité d'accrochage. Entre les extrémités d'accrochage 8a et 8c le corps du rayon 8 est filiforme et continu.

Les rayons 9 sont accrochés à la jante à l'aide d'un écrou de rayon 9c à tête élargie 9e qui est vissé sur l'extrémité filetée 9d du corps de rayon 9. La tête élargie 9e de l'écrou 9c est l'extrémité d'accrochage du rayon 9 au niveau de la jante. Entre les extrémités d'accrochage 9a et 9e, l'écrou 9c forme avec l'extrémité filetée 9d un dispositif de mise en tension réglable du rayon.

Pour le mode de réalisation représenté, la jante 1 a une structure en caisson avec un pont inférieur 13, un pont supérieur 14 et deux parois latérales 15 et 16 reliant les deux ponts. Les deux ponts 13, 14 sont percés d'orifices, le pont inférieur 13 d'orifices 13a de retenue des têtes d'accrochage de rayon, et le pont supérieur 14 d'orifices 14a de diamètre supérieur pour l'introduction des rayons 8, 9 ou écrous de rayon 9c à l'intérieur du caisson. Les orifices 13a, 14a sont répartis régulièrement à la périphérie des deux ponts et le nombre des rayons est égal sur les deux nappes de la roue.

Ce mode de construction n'est pas limitatif. Il est aussi possible de grouper les orifices 13a, 14a par paires, ou par groupes de trois orifices ou plus pour associer les rayons par groupes de deux rayons ou plus. On peut aussi avoir des nombres de rayons différents dans les deux nappes, en particulier dans le cas d'une roue arrière, avoir un nombre de rayons plus important du côté de la roue libre pour équilibrer la tension à l'intérieur des rayons des deux nappes, comme le décrit notamment la demande de brevet FR 2 387 802.

Naturellement on peut aussi prévoir tout aménagement approprié pour assurer une bonne assise des extrémités de rayons contre 1e pont inférieur de la jante, et notamment des oeillet simples, doubles, ou encore des rondelles intermédiaires.

Selon ce qui a été décrit précédemment, les rayons 8 du premier groupe de rayons ont une tête de retenue 8a, 8c à chacune des extrémités. Dans ces conditions il est nécessaire que les têtes 8a, 8c aient des dimensions différentes, et que la tête 8c ait notamment des dimensions supérieures à celles de la tête 8a, pour permettre la mise en place du rayon dans la jante. Selon une variante représentée en figure 6, la tête 8e a sensiblement les mêmes dimensions que l'autre tête du rayon et une rondelle intermédiaire 8f est enfilée sur le corps de rayon, au moment de la mise en forme de la tête 8e. Cette rondelle élargit l'assise de la tête 8e au niveau du pont inférieur 13 de la jante, elle soutient la tête de rayon au niveau du pont inférieur de la jante. Ainsi le rayon 8 peut être réalisé avec des têtes 8a, 8c de mêmes dimensions. Cette disposition permet également de faciliter la fabrication de la jante car il est alors possible de percer de la même façon les orifices de retenue 13a pour les rayons 8 et 9.

Les moyens d'accrochage des rayons à la jante ne sont pas limitatifs, d'autres moyens peuvent convenir selon la structure des rayons et de la jante, notamment on pourrait prévoir dans la jante des perçages en forme de boutonnière comme cela est décrit par exemple dans le brevet US 2 937 905 en relation avec les figures 1 à 5.

Pour le mode de réalisation illustré dans les figures 1 à 7, les rayons 8 du premier groupe ont tous une longueur identique entre les extrémités d'accrochage 8a, 8c. Cette longueur est déterminée avec une tolérance aussi faible que possible en fonction de l'état final de la roue, les rayons étant sous tension.

Les rayons sont réalisés en tout matériau approprié, notamment en acier inoxydable, en alliage d'aluminium ou autre. D'autres matériaux peuvent également convenir, notamment des matières composites. Les rayons peuvent également être formés par une succession de segments réalisés en des matériaux différents.

La roue est assemblée de la façon suivante. Les rayons du premier groupe, à savoir les rayons 8, sont accrochés à la jante et au moyeu. Dans un deuxième temps les rayons 9 ayant un dispositif de mise en tension 9c, 9d sont assemblés. L'assemblage des rayons 8 et 9 peut toutefois être réalisé de façon différente. Puis ces rayons 9 sont mis sous tension de façon globale pour établir un niveau général de contraintes entre la jante et le moyeu. Ce niveau général détermine la rigidité de la roue. Enfin la tension des rayons 9 est ajustée de façon locale pour régler la géométrie de la jante, notamment régler le voile, le centrage et le saut. Du fait de l'angle de parapluie que les nappes de rayons 8, 9 forment au niveau du moyeu, la mise en tension des rayons 9 génère sur le moyeu 2 et sur la jante 1 des composantes axiales et radiales qui sont reprises par les rayons 8 de l'autre nappe.

Dans ces conditions la tension dans les rayons 8 dépend des composantes axiales et radiales auxquelles les rayons sont soumis et de leur rigidité propre, c'est-à-dire leur résistance à l'allongement. De façon corrélative la tension dans les rayons 9 dépend du réglage de leur dispositif propre de mise en tension 9c, 9d et de la résistance que les rayons 8 opposent à l'allongement.

Afin d'optimiser la tension des rayons 8 et 9 on peut opérer de la façon suivante.

D'un point de vue mécanique la jante est en équilibre statique par rapport au moyeu 2 selon des directions axiale et radiale sous l'effet de la tension cumulée des rayons 8, 9 des deux nappes. Géométriquement lorsque les rayons 8, 9 sont tendus la jante est située dans le plan radial médian du moyeu c'est à dire que le plan radial médian du canal de réception du pneumatique (plan médial de la jante) dont la trace est représentée par le trait mixte 20 dans les figures 5 et 7 coïncide avec le milieu du moyeu 2, ce milieu étant défini non pas entre ses extrémités 10 et 11 d'accrochage des rayons, mais entre ses extrémités 21 et 22 de fixation au cadre du vélo (cf. figure 1).

Avec le mode d'assemblage qui a été décrit précédemment la mise en tension des rayons 9 attire la jante du côté de l'extrémité 11 du moyeu pour amener la jante en coïncidence avec le milieu du moyeu.

Du fait de la présence de la roue libre 6, les rayons 8 situés du côté de la roue libre sont plus rapprochés du milieu du moyeu que les rayons 9. De ce fait ils doivent être tendus davantage que les rayons 9 pour assurer l'équilibre axial de la jante. De plus toujours à cause de la roue libre, on dispose de peu de recul pour déplacer la jante axialement et tendre les rayons 8 depuis le moment où les rayons 8 sont détendus et juste assemblés à la jante et au moyeu, jusqu'au moment où la jante se trouve en coïncidence avec le milieu du moyeu et les rayons sont sous tension.

Lors de l'assemblage la situation la plus favorable pour obtenir en final une tension élevée dans les rayons 8 est que le plan médian 20 de la jante coïncide avec l'extrémité d'accrochage 10 du moyeu pour les rayons 8. Pour pouvoir accrocher les rayons 8 à la jante ou au moyeu il est en effet nécessaire d'avoir un jeu minimum dans les rayons 8 alors qu'ils sont tous à l'état détendu.

Pour un moyeu usuel de 130 millimètres de longueur, la distance entre cette extrémité d'accrochage 10 du moyeu et le milieu du moyeu représente environ 17 millimètres, compte tenu de l'encombrement de la roue libre.

De façon à augmenter le recul de la jante disponible pour la mise en tension des rayons, on déporte axialement le plan radial médian de réception du pneumatique par rapport au plan radial médian d'accrochage au niveau de l'extrémité d'accrochage 10 du moyeu des rayons dont la trace est schématisée en 24 dans les figures 5 et 7.

Une solution consiste à utiliser un profil de jante asymétrique, comme celui qui est visible dans ces figures, avec un déport du plan radial médian 20 de réception du pneumatique relativement au plan radial médian 24 d'accrochage des rayon, ce déport étant orienté du côté des rayons 8 dépourvus de dispositif de mise en tension.

Du fait de ce déport les rayons 9 doivent être davantage tendus pour amener la jante ou plus exactement le canal de réception du pneumatique en coïncidence avec le milieu du moyeu. Une tension plus élevée des rayons 9 induit par réaction une tension de rayon plus élevée dans les rayons 8. Ainsi on peut atteindre une tension plus élevée dans les deux nappes de rayons. On a pu constater sur une roue ayant le mode de rayonnage décrit qu'un déport de 3 millimètres entre les deux plans permettait une augmentation dans la tension des rayons de 43% du côté de la roue libre et de 70% du côté opposé à la roue libre. Globalement du fait de ce déport la rigidité de la roue est améliorée de façon significative. La roue peut supporter des sollicitations ou des charges extérieures plus importantes avant qu'un rayon ne se détende et provoque une défaillance momentanée de rigidité de la jante.

Une autre solution pour déporter le plan d'accrochage des rayons 9 consiste à accrocher ces rayons à la paroi latérale de la jante qui est opposée à l'extrémité d'accrochage du moyeu. La demande de brevet EP 1 300 262 illustre un tel mode de construction.

Le mode de construction de la roue qui vient d'être décrit n'est pas limitatif. Les rayons des deux nappes peuvent aussi être croisés, ou encore les rayons de la nappe située du côté opposé à la roue libre peuvent être radiaux et les autres rayons croisés. Egalement on peut placer le dispositif de mise en tension au niveau du moyeu ou bien le long des rayons 9. Cependant dans les différents cas on préférera la répartition des groupes de rayons qui a été décrite, à savoir le premier groupe de rayons dépourvus de dispositif de mise en tension formé par les rayons situés du côté de la roue libre, et le second groupe de rayons ayant un dispositif de mise en tension formé par les rayons situés du côté opposé à la roue libre.

Pour une roue comme celle décrite dans la figure 1 qui présente des rayons radiaux du côté de la roue libre, le fait que ces rayons, situés côté roue libre, soient dépourvus de dispositif de mise en tension est avantageux car ces rayons supportent une tension plus élevée que les rayons de l'autre nappe du fait de la différence d'inclinaison des nappes. En plus le montage de la roue est facilité car il est plus facile et rapide d'ajuster la tension des rayons 9 situés côté opposé roue libre et de régler les paramètres géométriques de la jante en jouant avec les dispositifs de mise en tension des rayons croisés de la nappe du côté opposé à la roue libre, vu que ces rayons sont moins tendus que ceux de la nappe opposé, sont davantage inclinés par rapport au plan médian de la jante et qu'ils sont de plus inclinés dans leur propre nappe de rayons du fait de leur croisement. Leur dispositif de mise en tension 9c, 9d est par ailleurs relativement moins sollicité en traction, et le réglage de la mise en tension s'effectue avec davantage de sensibilité et plus de rapidité.

Pour une roue qui aurait des rayons 8 croisés du côté de la roue libre 6, le fait que ces rayons 8 soient dépourvus de dispositif de mise en tension est en plus avantageux car ces rayons transmettent à la jante la plus grande partie du couple de transmission. Ils peuvent de ce fait supporter des charges dynamiques élevées.

D'une manière générale les rayons dépourvus de dispositif de mise en tension peuvent être chargés davantage en tension et sont aussi plus résistants à la fatigue, puisqu'ils ne comportent pas de pièces de réglage métallique plus fragiles. Cette résistance est encore optimisée si les rayons sont en matériau composite.

Selon un mode de réalisation, la nappe de rayons côté roue libre est en matériau composite et est dépourvue de moyens de réglage, et la nappe de rayons côté opposé roue libre est radiale et donc dépourvue de raideur en torsion, de sorte que les efforts de transmission transitent intégralement par le côté roue libre beaucoup plus résistant à la pratique car dépourvu de moyens de réglage (non composites) fragilisants.

Cependant d'autres modes de répartition pourraient aussi convenir. Par exemple pour des rayons croisés on a coutume de distinguer les rayons tracteurs qui transmettent à la jante une sollicitation dynamique de traction et les rayons non tracteurs ou pousseurs qui transmettent une sollicitation dynamique de poussée. Dans ces conditions le premier groupe de rayons peut être formé par les rayons tracteurs dont la tension dynamique s'ajoute à la tension statique, et le second groupe par les rayons pousseurs dont la tension dynamique se retranche de la tension statique. Pour un tel mode de construction il est préférable que le moyeu soit relativement flexible en torsion.

De façon générale, les rayons dépourvus de dispositif de mise en tension qui forment les rayons du premier groupe sont les rayons qui sont susceptibles de supporter les contraintes de tension les plus élevées, et les rayons du second groupe les autres rayons.

D'autres modes de répartition pourraient également convenir.

Du fait de la présence du dispositif de mise en tension pour une partie seulement des rayons, la roue est plus légère, plus facile et plus rapide à monter. En outre par une répartition judicieuse des rayons il est possible d'élever la tension dans l'ensemble des rayons et donc de rendre la roue plus rigide.

Il va de soi que la description ci-dessus s'applique également à une roue équipée d'un disque de freinage. La problématique est sensiblement la même. Du fait de la présence du disque, les rayons des deux nappes ont des inclinaisons différentes relativement au plan radial médian de la jante. Une des nappes est donc rapprochée du milieu du moyeu. La différence est qu'en dynamique les rayons transmettent à la jante un couple de freinage et non un couple d'entraînement.

L'invention s'applique aussi à une roue avant dont les rayons des deux nappes présentent la même inclinaison.

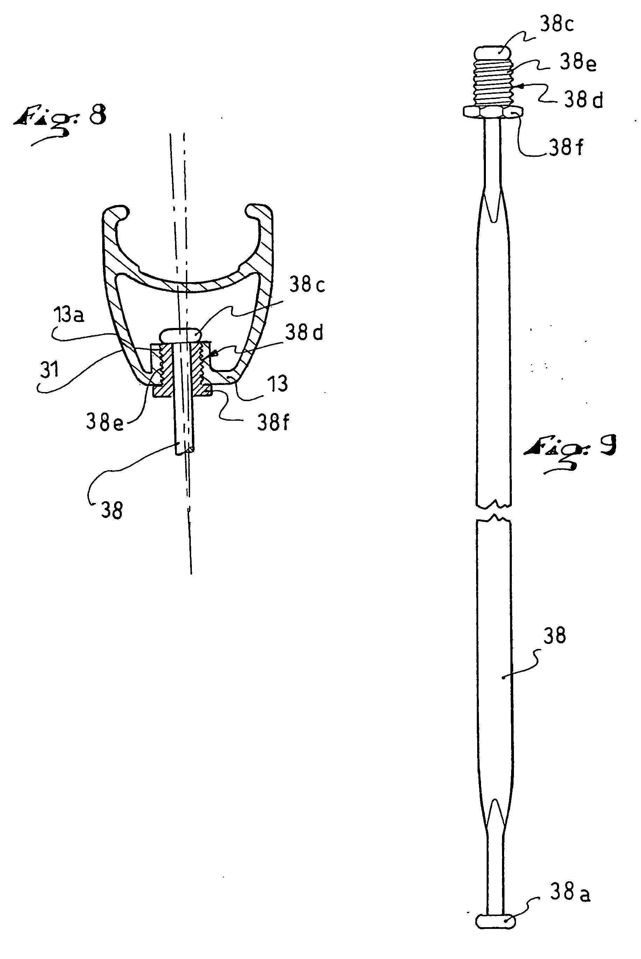

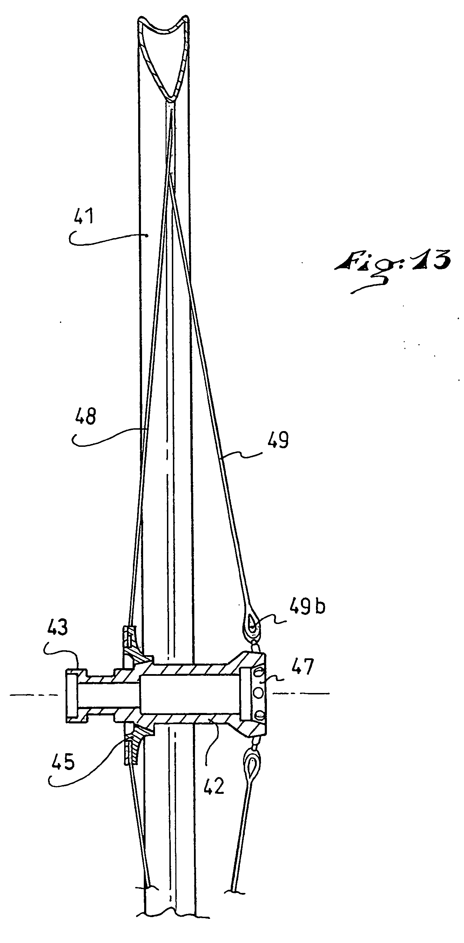

Les figures 8 à 11 illustrent une variante de mise en oeuvre de l'invention. La jante est ici réalisée conformément à ce qui est décrit dans la demande de brevet FR 2 750 913 relativement au mode de réalisation de la figure 13, et les rayons sont réalisés conformément à ce qui est décrit dans la demande de brevet FR 2 767 285.

Ainsi, le pont inférieur 13 de la jante est percé par une technique dite de fluoperçage qui produit des orifices 13a en forme de cheminée orientée vers l'intérieur du caisson. Ces orifices 13a sont taraudés pour permettre le vissage de vis creuses 38f qui retiennent les têtes 38c de rayons.

Les corps de rayon 38 sont réalisés en alliage d'aluminium ou d'un autre métal, leurs extrémités ont une forme de tête élargie. A l'extrémité du rayon située du côté de la jante une vis creuse 38a est enfilée sur le corps du rayon 38 pour servir de siège à la tête élargie 38c, cette vis est prévue pour être vissée dans un orifice 13a en forme de cheminée de la jante.

Les figures 8 à 11 montrent deux types de rayons, des rayons 38 qui sont dépourvus de dispositif de mise en tension et des rayons 39 qui ont un dispositif de mise en tension.

Les rayons 38 ont une première extrémité d'accrochage 38a pour l'accrochage au moyeu et une vis creuse 38d qui est située sous l'autre tête 38c pour l'accrochage à la jante. La vis creuse a une zone filetée 38e qui est prévue pour être vissé dans une cheminée 13a de la jante, et une collerette épaulée 38f qui est prévue pour venir en appui contre le pont inférieur 13 de la jante lors du serrage en force de la vis creuse 38d. La collerette épaulée a une section par exemple hexagonale pour permettre l'accouplement avec un outil de serrage. La figure 8 montre la vis creuse 38d dans la position serrée.

Une fois serrée en force la vis creuse épaulée 38d immobilise la tête élargie 38c du rayon au niveau de la jante. Bien qu'il y ait un système vis /écrou ce n'est pas un dispositif de mise en tension du rayon au sens de l'invention, la vis creuse épaulée a seulement une fonction d'accrochage de l'extrémité de rayon à la jante,

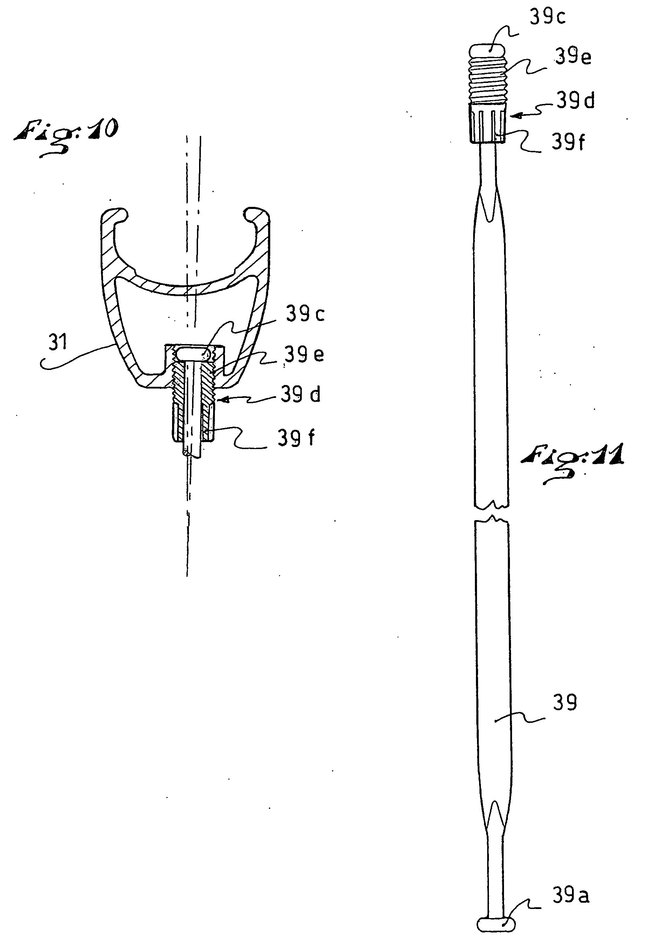

Le rayon 39 montré sur les figures 10, 11 présente une structure similaire, avec une tête élargie 39a pour l'accrochage au moyeu, et une vis creuse 39d située sous l'autre tête élargie 39c. Contrairement à la première vis creuse 38d, la présente vis 39d n'a pas d'épaulement et de ce fait elle peut être vissée par une zone filetée 39e plus ou moins profondément dans l'orifice de la jante en forme de cheminée à l'aide d'une outil de réglage qui est accouplé avec la vis creuse, par exemple dans une zone 39f. Cette vis creuse forme un système vis/écrou avec l'orifice de la jante, et permet une mise en tension des rayons ainsi qu'un ajustement de la tension induite. Des variantes de ce mode de construction sont également possibles.

L'assemblage de la roue est réalisé selon le même mode opératoire que celui décrit précédemment. Dans un premier temps les rayons 38 sont assemblés au moyeu et à la jante où les vis creuses épaulées 38d sont serrées en force. Ensuite les rayons 39 sont assemblés et ils sont mis sous tension à l'aide des vis creuses 39d, ce qui induit par réaction une tension dans les rayons 38. La tension des rayons peut ensuite être ajustée localement par une action sur le dispositif propre de mise en tension d'un ou plusieurs rayons 39 afin de régler la géométrie de la jante.

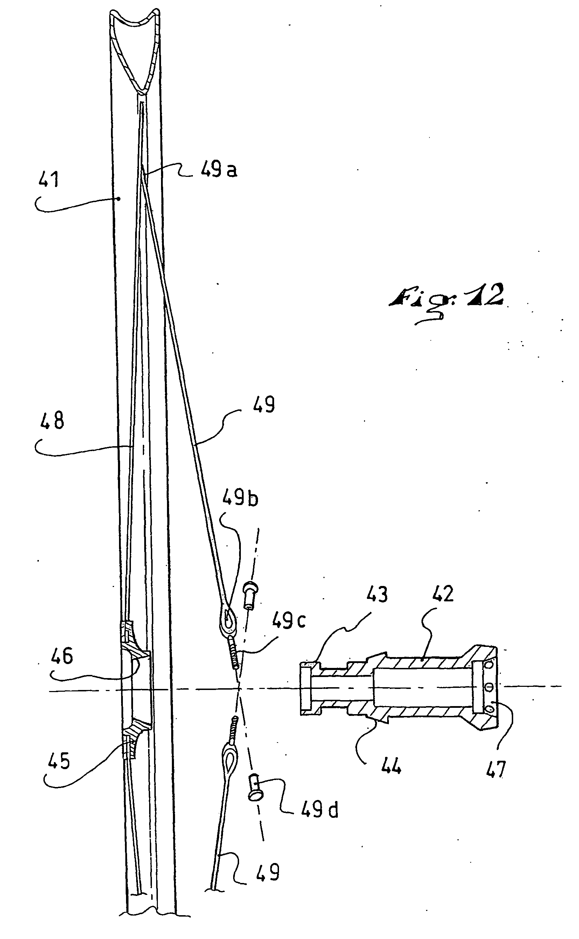

Les figures 12 et 13 illustrent l'application de l'invention à la construction d'une roue en matériau composite.

Cette roue comprend une jante 41 en matière composite, notamment en fibres de carbone noyées dans une matrice de résine. D'autres matières peuvent aussi convenir. La jante est fabriquée selon une technique connue. Par exemple des fibres de carbone enduites de résine sont déposées en nappes autour d'un noyau en mousse. Selon une autre technique d'assemblage les nappes de fibres sont déposées dans un moule, et elles sont plaquées contre la paroi du moule par l'expansion d'une baudruche gonflable.

La roue présente une première nappe de rayons 48. Ces rayons sont également réalisés en une matière composite, et ils sont dépourvus de dispositif de mise en tension. Par exemple les rayons sont réalisés à partir de mèches de fibres de carbone qui sont enduites de résine et placées dans un moule de mise en forme.

Les rayons 48 sont assemblés solidairement à la jante. Par exemple ils sont assemblés à l'aide d'une colle ou à l'aide de résine et copolymérisés directement avec la jante lors du moulage de celle-ci.

Au centre de la nappe les rayons 48 sont assemblés à un flasque 45 qui sera utilisé ultérieurement pour l'assemblage avec le moyeu. Le flasque 45 a un évidement central 46. Les rayons 48 sont fixés solidairement au flasque 45. Il est possible de fabriquer les rayons par paires c'est-à-dire de réaliser un élément ayant la longueur de deux rayons bout à bout. Chaque extrémité de cet élément est prévue pour être assemblé solidairement à la jante, et en son milieu l'élément est assemblé solidairement au flasque 45 par exemple à l'aide d'une colle ou d'une résine. Le flasque est réalisé en tout matériau approprié, par exemple en alliage d'aluminium ou d'un autre métal.

D'autres modes de construction peuvent également convenir.

Les rayons 49 de l'autre nappe sont également réalisés en matière composite, et ils présentent entre leurs extrémités d'accrochage un dispositif de mise en tension. Par exemple les rayons sont réalisés à partir de mèches de fibres de carbone enduites de résine. Selon le mode de réalisation illustré les extrémités 49a des rayons 49 sont assemblées solidairement à la jante, par exemple à l'aide d'une colle ou d'une résine.

Vers le centre de la nappe chaque rayon 49 se termine par un insert 49b prolongé par un embout fileté 49c. Cet embout est prévu pour coopérer avec un écrou de rayon 49d qui possède une tête élargie de retenue. Par exemple l'extrémité de la partie composite est formée selon une boucle, et l'insert est logé à l'intérieur de la boucle au moment de la fabrication du rayon ou bien ultérieurement.

Le moyeu comprend un corps de moyeu 42 de forme générale tubulaire. Le corps de moyeu 42 présente à une extrémité un embout qui est prévu pour recevoir le corps de roue libre et le mécanisme de roue libre, une collerette d'emmanchement 44 qui est prévue pour coopérer avec le flasque 45 et à l'autre extrémité un bulbe ouvert 47 percé d'orifices prévus pour l'assemblage des rayons 49. Pour faciliter le centrage du corps de moyeu par rapport à la nappe de rayon, et assurer une accouplement en rotation, de préférence l'évidement 46 du flasque 45 et la collerette d'emmanchement 44 ont une forme tronconique, et les surfaces de contact sont pourvues d'un ensemble de cannelures complémentaires. On peut prévoir d'autres moyens d'emmanchement et de centrage, comme par exemple des surfaces de contact de forme pyramidale.

Une fois le corps de moyeu emmanché avec le flasque 45, les écrous 49d sont vissés sur les embouts filetés 49c depuis l'intérieur du bulbe 45, au travers de ses orifices. Ceci a pour effet de tendre les rayons 49 et par réaction les rayons 48, et d'amener la jante 41 en coïncidence avec le milieu du moyeu. Le cas échéant la géométrie de la jante peut être ajustée en jouant sur la tension individuelle des rayons 49.

Comme dans le cas précédent le profil de la jante peut être asymétrique pour atteindre une tension plus élevée dans les rayons par un déport initial plus important de la jante.

La roue ainsi construite est particulièrement légère, et présente une faible inertie de rotation. En outre la géométrie de la jante est ajustable au moment du montage et la roue est facilement démontable ultérieurement, ce qui n'est pas le cas avec les roues en matériau composite monolithiques. En outre un défaut de géométrie peut être corrigé ultérieurement si nécessaire à l'aide de rayons réglables 49.

La structure des rayons qui a été décrite n'est pas limitative et l'invention s'applique également à des rayons de structure complexe, c'est-à-dire qui ont une structure différente d'un élément filiforme rectiligne. Avantageusement de tels rayons sont réalisés en matière composite et la roue est construite selon le même mode de construction que la roue précédente, mais ce n'est toutefois pas limitatif et d'autres matières peuvent aussi convenir.

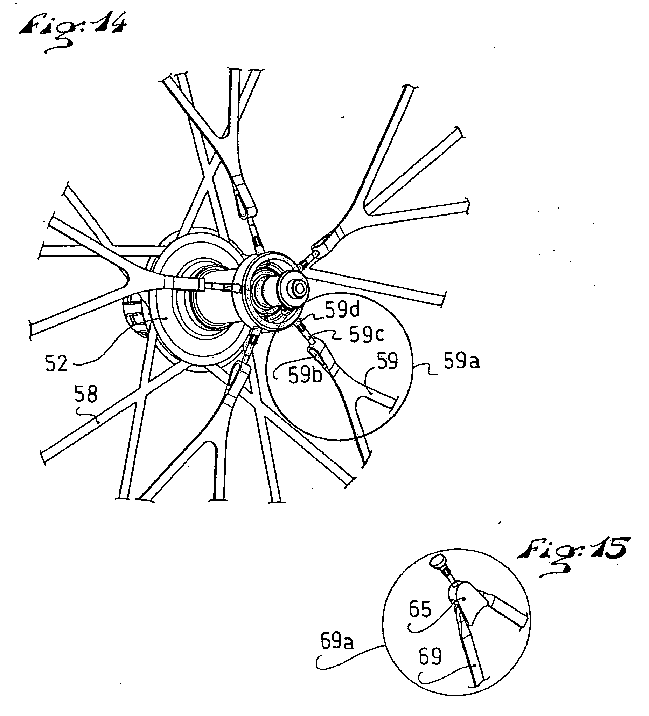

Pour illustrer cela la figure 14 représente la partie centrale d'une roue avec son moyeu 52 et des rayons 58 et 59.

Les rayons 58 sont dépourvus de dispositif de mise en tension et les rayons 59 ont un dispositif de mise en tension. Selon le mode de réalisation représenté les rayons 58 ont une structure en" X " c'est à dire que ces rayons sont formés par deux branches longilignes qui se croisent et qui sont reliés solidairement à leur croisement. Les extrémités des branches sont reliées d'un côté au moyeu et de l'autre à la jante par tout moyeu approprié et notamment par collage. Au niveau du moyeu les branches peuvent se prolonger par les branches d'autres rayons 58 de la nappe.

Les rayons 59 sont reliés deux par deux par une structure en "Y" 59a. Les extrémités des deux branches supérieures sont reliées solidairement à la jante par exemple par collage comme expliqué précédemment. La branche inférieure présente à son extrémité le même dispositif d'accrochage que celui qui a été décrit pour le mode de réalisation précédent, c'est à dire un insert 59b prolongé par un embout fileté 59c sur lequel est vissé un écrou de rayon 59d. La tête de l'écrou de rayon 59d est retenue dans le corps de moyeu. L'embout fileté forme avec l'écrou le dispositif de mise en tension du rayon complexe 59.

A la place d'un insert 59b on peut avoir un renvoi 65 qui se loge à la jonction des branches supérieures du "Y" 69a ainsi que le montre la figure 15 pour des rayons 69. L'intérêt de la construction en "Y" est qu'en fait un moyen de réglage 59b, 59c permet de régler la tension de deux rayons 59 réunis par une structure en "Y" 59a. La durée de réglage est de ce fait encore réduite. On réduit également le nombre de moyens de réglage susceptibles de fragiliser le rayon.

Les rayons 58 et 59 peuvent être utilisés les uns ou les autres avec des rayons filiformes traditionnels. D'autres structures complexes de rayons peuvent aussi être utilisés. Notamment les rayons pourraient être formés par un filament souple et inextensible tendu entre la jante et le moyeu et accrochés à chacun d'eux avec des éléments de renvoi.

D'autres modes de construction de la roue peuvent être adoptés. Par exemple comme cela est connu, il est possible de construire la roue en deux parties, chaque partie comprenant une moitié de jante et une nappe de rayons assemblés à cette moitié de jante, puis d'assembler entre elles les deux parties. D'autres modes de construction sont également possibles.

La roue qui vient d'être décrite est une roue arrière, ce n'est pas limitatif, l'invention s'appliquerait de la même façon à une roue équipée d'un frein à disque ou à une roue dont les deux nappes de rayons ont une orientation symétrique.

Naturellement la présente description n'est donnée qu'à titre indicatif et on pourrait adopter d'autres variantes sans pour autant sortir du cadre de l'invention.

Notamment l'invention s'applique aux roues qui présentent trois nappes de rayons, à savoir deux nappes reliant la jante à chacune des deux extrémités du moyeu et une troisième nappe reliant la jante au milieu du moyeu.

## Revendications

1. Procédé de fabrication d'une roue, la roue comprenant une jante périphérique (1, 31, 41), un moyeu central (2) et des rayons de liaison (8, 9, 38, 39, 48, 49) tendus entre la jante et le moyeu **caractérisé par le fait qu'**il comprend les étapes :
- de répartir les rayons (8, 9, 38, 39, 48, 49, 59, 69) selon deux groupes, un premier groupe de rayons (8, 38, 48, 58) dépourvus de dispositif de mise en tension et un second groupe de rayons (9, 39, 49, 59, 69) ayant un dispositif de mise en tension,
- d'assembler les rayons à la jante et au moyeu,
- puis d'ajuster la tension des rayons à l'aide des dispositifs de mise en tension (9c, 9d, 39d, 49c, 49d, 59c, 59d) des rayons (9, 39, 49, 59) du second groupe de rayons.

2. Procédé de fabrication d'une roue selon la revendication 1, où le moyeu a deux extrémités et les rayons relient la jante au moyeu en deux nappes accrochées à chacune des extrémités du moyeu, **caractérisé par le fait que** le premier groupe de rayons est formé par les rayons d'une nappe et que le second groupe de rayons est formé par les rayons de l'autre nappe.

3. Procédé selon la revendication 2 où les extrémités des rayons des deux nappes sont accrochées au moyeu à des distances différentes du milieu de moyeu, **caractérisé par le fait que** le premier groupe de rayons est formé par les rayons de la nappe de rayons (8, 38, 48, 58) dont les extrémités sont les plus proches du milieu de moyeu.

4. Procédé selon la revendication 1, où le moyeu a deux extrémités et les rayons relient la jante au moyeu en deux nappes accrochées à chacune des extrémités du moyeu et où les rayons des nappes sont croisés et orientés en tant que rayon tracteur ou rayon pousseur, **caractérisé par le fait que** la répartition des rayons est réalisée en fonction de la nature tracteur ou pousseur des rayons.

5. Procédé selon la revendication 2 où la jante et les rayons sont réalisés en une matière composite, **caractérisé par le fait qu'**on forme une nappe de rayons (48) dépourvus de dispositif de mise en tension, que la nappe est solidarisée à un flasque (45) située en son centre, qu'on emmanche le flasque (45) sur un corps de moyeu (42) et qu'on accroche les rayons (49) ayant un dispositif de mise en tension (49c, 49d) à l'autre extrémité du moyeu.

6. Roue à rayons en tension comprenant un moyeu central (2), une jante périphérique (1, 31, 41) et des rayons de liaison (8, 9, 38, 39, 48, 49, 59, 69) entre la jante et le moyeu, le moyeu (2) ayant deux extrémités (10, 11), la jante (1, 31, 41) et chacune des extrémités (10, 11) du moyeu ayant un dispositif d'accrochage des rayons, les rayons (8, 9, 38, 39, 48, 49, 59, 69) ayant un corps filiforme et des extrémités par lesquelles ils sont accrochés d'un côté à la jante et de l'autre au moyeu, et les rayons étant répartis selon au moins deux nappes, chacune des nappes reliant la jante (1, 31, 41) à une extrémité (10, 11) du moyeu, **caractérisée par le fait que** les rayons sont répartis en deux groupes, un premier groupe de rayons (8, 38, 48) dépourvus de tout dispositif de mise en tension et un second groupe de rayons (9, 39, 49, 59, 69) ayant un dispositif de mise en tension (9c, 9d) entre leurs deux extrémités d'accrochage.

7. Roue selon la revendication 6, **caractérisée par le fait que** le premier groupe de rayons est formé par les rayons (8, 38, 48, 58) d'une nappe et que le second groupe de rayons est formé par les rayons (9, 39, 49, 59) de l'autre nappe.

8. Roue selon la revendication 7, **caractérisée par le fait que** la jante (1) a un profil asymétrique, le plan médian (20) du canal de réception du pneumatique étant déporté par rapport au plan médian (24) d'accrochage des rayons du côté des rayons (8) dépourvus de dispositif de mise en tension.

9. Roue selon la revendication 7 où une extrémité (11) du moyeu est plus proche du milieu du moyeu que l'autre, **caractérisée par le fait que** les rayons (8, 38, 48, 58) dépourvus de dispositif de mise en tension sont accrochés à l'extrémité (11) du moyeu la plus proche du milieu du moyeu.

10. Roue selon la revendication 7, **caractérisée par le fait que** les rayons (8) dépourvus de dispositif de mise en tension sont orientés de façon radiale dans leur nappe de rayons.

11. Roue selon la revendication 7, **caractérisée par le fait que** les rayons (9) ayant un dispositif de mise en tension sont croisés dans leur nappe de rayons.

12. Roue selon l'une des revendications 6 à 11, **caractérisée par le fait que** les rayons (8) du premier groupe de rayons ont un tête élargie (8a, 8c, 8e, 38a, 38c) à chacune de leurs extrémités et un corps filiforme continu entre les extrémités.

13. Roue selon la revendication 12, **caractérisée par le fait que** la tête (8e) accrochée à la jante est soutenue par une rondelle (8f).

14. Roue selon la revendication 12 où la jante (31) présente des orifices en forme de cheminée pour l'accrochage des rayons, **caractérisée par le fait que** la tête (38c) des rayons (38) est accrochée à la jante au moyen d'une vis creuse (38d) ayant une collerette épaulée (38f) qui est serrée à force dans l'orifice de la jante.

15. Roue selon l'une des revendications 6 à 14, **caractérisée par le fait que** les rayons (48) dépourvus de dispositif de mise en tension sont assemblés de façon solidaires à un flasque (45) situé au centre de la nappe de rayon, que le flasque est monté par emmanchement à une extrémité du corps de moyeu (42) du moyeu, et que les rayons (49) ayant un dispositif de mise en tension sont accrochés à l'autre extrémité du corps de moyeu.

16. Roue selon la revendication 15, **caractérisé par le fait que** le flasque (45) et le corps de moyeu (42) sont munis de cannelures dans la zone d'emmanchement.

17. Roue selon l'une des revendications 6 à 16, **caractérisée en ce que** les rayons (9, 39, 49) ayant un dispositif de mise en tension sont disposés selon une nappe ayant la plus forte inclinaison.

18. Roue selon l'une des revendications 6 à 17, **caractérisée en ce que** les rayons (9, 39, 49) sont en matériau composite.

19. Roue selon l'une des revendications 6 à 10 et 12 à 18, **caractérisée en ce que** les rayons (9, 39, 49) ayant un dispositif de mise en tension sont disposés de façon radiale.

## Claims

1. Method of producing a wheel, the wheel comprising a peripheral rim (1, 31, 41), a central hub (2) and connecting spokes (8, 9, 38, 39, 48, 49) stretching between the rim and the hub, **characterized in that** it comprises the steps:
- of distributing the spokes (8, 9, 38, 39, 48, 49, 59, 69) into two groups, a first group of spokes (8, 38, 48, 58) having no tensioning device and a second group of spokes (9, 39, 49, 59, 69) having a tensioning device,
- of assembling the spokes with the rim and with the hub,
- and then of adjusting the tension in the spokes using the tensioning devices (9c, 9d, 39d, 49c, 49d, 59c, 59d) for tensioning the spokes (9, 39, 49, 59) of the second group of spokes.

2. Method of producing a wheel according to Claim 1, in which the hub has two ends and the spokes connect the rim to the hub in two layers which are attached one to each of the ends of the hub, **characterized in that** the first group of spokes is formed by the spokes of one layer and **in that** the second group of spokes is formed by the spokes of the other layer.

3. Method according to Claim 2, in which the ends of the spokes of the two layers are attached to the hub at different distances from the middle of the hub, **characterized in that** the first group of spokes is formed of the spokes of the layer of spokes (8, 38, 48, 58) the ends of which are closest to the middle of the hub.

4. Method according to Claim 1, in which the hub has two ends and the spokes connect the rim to the hub in two layers attached to each of the ends of the hub and in which the spokes of the layers are crossed and oriented as pulling spokes or pushing spokes, **characterized in that** the spokes are distributed according to the pulling or pushing nature of the spokes.

5. Method according to Claim 2, in which the rim and the spokes are made of a composite material, **characterized in that** one layer of spokes (48) which do not have tensioning devices is formed, **in that** the layer is secured to a flange (45) situated at its centre, **in that** the flange (45) is fitted onto a hub body (42) and **in that** the spokes (49) that have a tensioning device (49c, 49d) are attached to the other end of the hub.

6. Wheel with tensioned spokes comprising a central hub (2), a peripheral rim (1, 31, 41) and connecting spokes (8, 9, 38, 39, 48, 49, 59, 69) connecting the rim and the hub, the hub (2) having two ends (10, 11), the rim (1, 31, 41) and each of the ends (10, 11) of the hub having a spoke-attachment device, the spokes (8, 9, 38, 39, 48, 49, 59, 69) having a wire-like body and ends via which they are attached, at one end to the rim and at the other to the hub, and the spokes being distributed in at least two layers, each of the layers connecting the rim (1, 31, 41) to one end (10, 11) of the hub, **characterized in that** the spokes are distributed in two groups, a first group of spokes (8, 38, 48) having no tensioning device and a second group of spokes (9, 39, 49, 59, 69) that has a tensioning device (9c, 9d) between their two attachment ends.

7. Wheel according to Claim 6, **characterized in that** the first group of spokes is formed by the spokes (8, 38, 48, 58) of one layer and **in that** the second group of spokes is formed by the spokes (9, 39, 49, 59) of the other layer.

8. Wheel according to Claim 7, **characterized in that** the rim (1) has an asymmetric profile, the medium plane (20) of the channel that accepts the tyre being offset from the median plane (24) of attachment of the spokes on the side of the spokes (8) that have no tensioning device.

9. Wheel according to Claim 7, in which one end (11) of the hub is closer to the middle of the hub than the other, **characterized in that** the spokes (8, 38, 48, 58) that have no tensioning device are attached to that end (11) of the hub that is closer to the middle of the hub.

10. Wheel according to Claim 7, **characterized in that** the spokes (8) that have no tensioning device are oriented radially in their layer of spokes.

11. Wheel according to Claim 7, **characterized in that** the spokes (9) that have a tensioning device are crossed in their layer of spokes.

12. Wheel according to one of Claims 6 to 11, **characterized in that** the spokes (8) of the first group of spokes have an enlarged head (8a, 8c, 8e, 38a, 38c) at each of their ends, and a continuous wire-like body between the ends.

13. Wheel according to Claim 12, **characterized in that** the head (8e) attached to the rim is supported by a washer (8f).

14. Wheel according to Claim 12 in which the rim (31) has orifices in the form of hollow shafts for the attachment of the spokes, **characterized in that** the head (38c) of the spokes (38) is attached to the rim using a hollow screw (38d) having a stepped collar (38f) which is forcibly clamped in the hole in the rim.

15. Wheel according to one of Claims 6 to 14, **characterized in that** the spokes (48) that have no tensioning device are assembled firmly to a flange (45) situated at the centre of the layer of spokes, **in that** the flange is force-fitted onto one end of the hub body (42) of the hub, and **in that** the spokes (49) that have a tensioning device are attached to the other end of the hub body.

16. Wheel according to Claim 15, **characterized in that** the flange (45) and the hub body (42) are splined in the region where they are fitted together.

17. Wheel according to one of Claims 6 to 16, **characterized in that** the spokes (9, 39, 49) that have a tensioning device are arranged in a layer having the greatest inclination.

18. Wheel according to one of Claims 6 to 17, **characterized in that** the spokes (9, 39, 49) are made of composite material.

19. Wheel according to one of Claims 6 to 10 and 12 to 18, **characterized in that** the spokes (9, 39, 49) that have a tensioning device are arranged radially.

## Patentansprüche

1. Verfahren zur Herstellung eines Rades, wobei das Rad eine periphere Felge (1, 31, 41), eine zentrale Nabe (2) und Verbindungsspeichen (8, 9, 38, 39, 48, 49) umfasst, die zwischen der Felge und der Nabe gespannt sind, **dadurch gekennzeichnet, dass** es die folgenden Schritte umfasst:
- Aufteilung der Speichen (8, 9, 38, 39, 48, 49, 59, 69) in zwei Gruppen, eine erste Gruppe von Speichen (8, 38, 48, 58) ohne Spannvorrichtung und eine zweite Gruppe von Speichen (9, 39, 49, 59, 69) mit Spannvorrichtung,
- Zusammenbau der Speichen mit der Felge und der Nabe,
- dann Einstellung der Spannung der Speichen mit Hilfe der Spannvorrichtungen (9c, 9d, 39d, 49c, 49d, 59c, 59d) der Speichen (9, 39, 49, 59) der zweiten Gruppe von Speichen.

2. Verfahren zur Herstellung eines Rades nach Anspruch 1, bei dem die Nabe zwei Enden aufweist und die Speichen die Felge mit der Nabe in zwei Lagen verbinden, die jeweils an den Enden der Nabe befestigt sind, **dadurch gekennzeichnet, dass** die erste Gruppe von Speichen von den Speichen einer Lage und die zweite Gruppe von Speichen von den Speichen der anderen Lage gebildet werden.

3. Verfahren nach Anspruch 2, bei dem die Enden der Speichen der zwei Lagen an der Nabe in unterschiedlichen Abständen zur Mitte der Nabe befestigt sind, **dadurch gekennzeichnet, dass** die erste Gruppe von Speichen von den Speichen der Speichenlage (8, 38, 48, 58) gebildet wird, deren Enden der Nabenmitte am nächsten sind.

4. Verfahren nach Anspruch 1, bei dem die Nabe zwei Enden aufweist und die Speichen die Felge mit der Nabe in zwei Lagen verbinden, die jeweils an den Enden der Nabe befestigt sind, und bei dem die Speichen der Lagen gekreuzt und als Zug- oder Schubspeiche ausgerichtet sind, **dadurch gekennzeichnet, dass** die Aufteilung der Speichen in Abhängigkeit von der Art der Speichen als Zug- oder Schubspeiche erfolgt.

5. Verfahren nach Anspruch 2, bei dem die Felge und die Speichen aus einem Verbundstoff hergestellt sind, **dadurch gekennzeichnet, dass** eine Lage von Speichen (48) ohne Spannvorrichtung gebildet wird, dass die Lage mit einem Flansch (45) verbunden ist, der sich in ihrer Mitte befindet, dass der Flansch (45) auf einen Nabenkörper (42) gesteckt wird und dass die Speichen (49) mit Spannvorrichtung (49c, 49d) am anderen Ende der Nabe befestigt werden.

6. Rad mit gespannten Speichen, umfassend eine zentrale Nabe (2), eine periphere Felge (1, 31, 41) und Verbindungsspeichen (8, 9, 38, 39, 48, 49, 59, 69) zwischen der Felge und der Nabe, wobei die Nabe (2) zwei Enden (10, 11) aufweist, wobei die Felge (1, 31, 41) und jedes der Enden (10, 11) der Nabe eine Vorrichtung zur Befestigung der Speichen aufweisen, wobei die Speichen (8, 9, 38, 39, 48, 49, 59, 69) einen fadenförmigen Körper und Enden aufweisen, mit denen sie auf einer Seite an der Felge und auf der anderen an der Nabe befestigt sind, und wobei die Speichen in mindestens zwei Lagen aufgeteilt sind, wobei jede der Lagen die Felge (1, 31, 41) mit einem Ende (10, 11) der Nabe verbindet, **dadurch gekennzeichnet, dass** die Speichen in zwei Gruppen aufgeteilt sind, eine erste Gruppe von Speichen (8, 38, 48) ohne jegliche Spannvorrichtung und eine zweite Gruppe von Speichen (9, 39, 49, 59, 69), die eine Spannvorrichtung (9c, 9d) zwischen ihren beiden Befestigungsenden aufweist.

7. Rad nach Anspruch 6, **dadurch gekennzeichnet, dass** die erste Gruppe von Speichen von den Speichen (8, 38, 48, 58) einer Lage und die zweite Gruppe von Speichen von den Speichen (9, 39, 49, 59) der anderen Lage gebildet werden.

8. Rad nach Anspruch 7, **dadurch gekennzeichnet, dass** die Felge (1) ein asymmetrisches Profil hat, wobei die Mittelebene (20) des Aufnahmekanals für den Luftreifen in Bezug zur Mittelebene (24) zur Befestigung der Speichen auf der Seite der Speichen (8) ohne Spannvorrichtung versetzt ist.

9. Rad nach Anspruch 7, bei dem ein Ende (11) der Nabe näher der Mitte der Nabe ist als das andere, **dadurch gekennzeichnet, dass** die Speichen (8, 38, 48, 58) ohne Spannvorrichtung an dem Ende (11) der Nabe befestigt sind, das der Mitte der Nabe am nächsten ist.

10. Rad nach Anspruch 7, **dadurch gekennzeichnet, dass** die Speichen (8) ohne Spannvorrichtung radial in ihrer Speichenlage ausgerichtet sind.

11. Rad nach Anspruch 7, **dadurch gekennzeichnet, dass** die Speichen (9) mit Spannvorrichtung in ihrer Speichenlage gekreuzt sind.

12. Rad nach einem der Ansprüche 6 bis 11, **dadurch gekennzeichnet, dass** die Speichen (8) der ersten Gruppe von Speichen einen erweiterten Kopf (8a, 8c, 8e, 38a, 38c) an jedem ihrer Enden und einen kontinuierlichen fadenförmigen Körper zwischen den Enden aufweisen.

13. Rad nach Anspruch 12, **dadurch gekennzeichnet, dass** der Kopf (8e), der an der Felge befestigt ist, von einer Scheibe (8f) unterstützt wird.

14. Rad nach Anspruch 12, bei dem die Felge (31) Öffnungen in Form eines Kamins für die Befestigung der Speichen aufweist, **dadurch gekennzeichnet, dass** der Kopf (38c) der Speichen (38) an der Felge mit Hilfe einer Hohlschraube (38d) mit einem abgesetzten Kragen (38f) befestigt ist, die fest in die Öffnung der Felge geschraubt wird.

15. Rad nach einem der Ansprüche 6 bis 14, **dadurch gekennzeichnet, dass** die Speichen (48) ohne Spannvorrichtung fest in einem Flansch (45) zusammengefasst sind, der sich in der Mitte der Speichenlage befindet, dass der Flansch durch Einstecken an einem Ende des Nabenkörpers (42) der Nabe montiert ist und dass die Speichen (49) mit Spannvorrichtung am anderen Ende des Nabenkörpers befestigt sind.

16. Rad nach Anspruch 15, **dadurch gekennzeichnet, dass** der Flansch (45) und der Nabenkörper (42) mit Rillen in der Einsteckzone versehen sind.

17. Rad nach einem der Ansprüche 6 bis 16, **dadurch gekennzeichnet, dass** die Speichen (9, 39, 49) mit Spannvorrichtung in einer Lage mit der stärksten Neigung angeordnet sind.

18. Rad nach einem der Ansprüche 6 bis 17, **dadurch gekennzeichnet, dass** die Speichen (9, 39, 49) aus einem Verbundstoff sind.

19. Rad nach einem der Ansprüche 6 bis 10 und 12 bis 18, **dadurch gekennzeichnet, dass** die Speichen (9, 39, 49) mit Spannvorrichtung radial angeordnet sind.
